(19) Europäisches Patentamt / European Patent Office / Office européen des brevets

(11) **EP 2 284 654 A1**

## (12) EUROPEAN PATENT APPLICATION

(43) Date of publication:
**16.02.2011 Bulletin 2011/07**

(21) Application number: **09167905.0**

(22) Date of filing: **14.08.2009**

(51) Int Cl.:
*G06F 3/023* (2006.01)       *G06F 3/01* (2006.01)
*G06F 3/041* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **RESEARCH IN MOTION LIMITED**
**Waterloo, Ontario N2L 3W8 (CA)**

(72) Inventors:
• **Griffin, Jason, Tyler**
 **Waterloo Ontario N2L 3W8 (CA)**

• **Pasquero, Jerome**
 **Waterloo Ontario N2L 3W8 (CA)**

(74) Representative: **MERH-IP**
 **Matias Erny Reichl Hoffmann**
 **Paul-Heyse-Strasse 29**
 **80336 München (DE)**

Remarks:
Amended claims in accordance with Rule 137(2) EPC.

(54) **Electronic device including tactile touch-sensitive input device and method of controlling same**

(57) A method of controlling an electronic device that has a touch-sensitive input device, includes detecting a touch on the touch-sensitive input device, determining an input based on the touch and providing a response to the touch by modulating a force applied by an actuating arrangement on the touch-sensitive input device based on the input.

Figure 9

## Description

### FIELD OF TECHNOLOGY

The present disclosure relates to portable electronic devices that include a touch-sensitive input device such as a touch-sensitive display and the provision of tactile feedback using such input devices.

### BACKGROUND

Electronic devices, including portable electronic devices, have gained widespread use and may provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. Touch-sensitive input devices are useful for input on a portable electronic device.

Devices such as PDAs or smart telephones are generally intended for handheld use and ease of portability. Smaller devices are generally desirable for portability. Touch screen devices constructed of a display, such as a liquid crystal display, with a touch-sensitive overlay are useful on such handheld devices as such handheld devices are small and are therefore limited in space available for user input and output devices. Further, the screen content on the touch screen devices can be modified depending on the functions and operations being performed.

Improvements in provision and control of tactile feedback in touch-sensitive devices are desirable.

### SUMMARY

A method of controlling an electronic device that has a touch-sensitive input device, includes detecting a touch on the touch-sensitive input device, determining an input based on the touch and providing a response to the touch by modulating a force applied by an actuating arrangement on the touch-sensitive input device based on the input.

An electronic device includes a base, a touch-sensitive input device moveable relative to the base, and an actuating arrangement that includes at least one actuator between the base and the touch-sensitive input device to modulate a force on the touch-sensitive input device, based on an input determined in response to detecting a touch.

A computer-readable medium has computer-readable code embodied therein for execution by a processor in an electronic device having a base, a touch-sensitive input device moveable relative to the base, and an actuating arrangement including at least one actuator between the base and the touch-sensitive input device, to cause the electronic device to modulate a force on the touch-sensitive input device based on an input determined in response to detecting a touch.

### BRIEF DESCRIPTION OF THE DRAWINGS

Embodiments of the present disclosure will now be described, by way of example only, with reference to the attached Figures, wherein:

Figure 1 is a simplified block diagram of components including internal components of a portable electronic device according an aspect of an embodiment;

Figure 2 is a front view of an example of a portable electronic;

Figure 3A is a sectional side view of portions of the touch-sensitive display of Figure 2;

Figure 3B is a sectional side view of portions of the touch-sensitive display of Figure 2;

Figure 3C is a side view of a portion of the portable electronic device of Figure 2;

Figure 4 is a functional block diagram of an actuating arrangement of the portable electronic device;

Figures 5 to 7 are simplified examples of graphs of voltage across a piezoelectric disk versus time illustrating responses to detection of a touch during operation of the portable electronic device, according to an embodiment;

Figure 8 is a flow-chart illustrating a method of controlling a portable electronic device according to an embodiment; and

Figure 9 is a flow chart illustrating an example of the method of controlling the portable electronic device of Figure 8.

### DETAILED DESCRIPTION

The following describes an apparatus for and method of controlling a portable electronic device. A touch on a touch-sensitive display of the portable electronic device is detected and an input is determined based on the touch. A response to the touch is provided by modulating a force applied by an actuating arrangement on the touch-sensitive input device based on the input.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

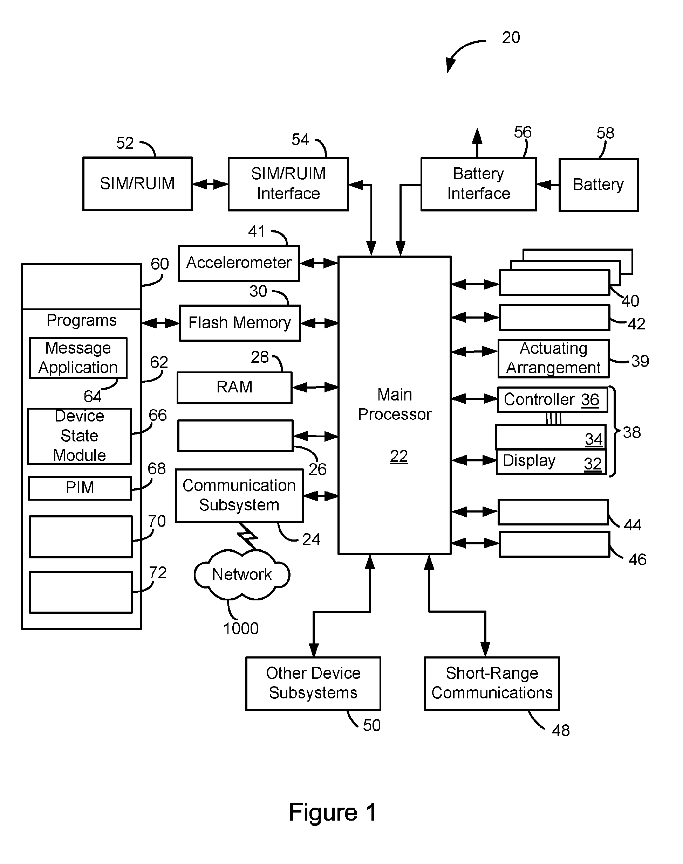

Referring to Figure 1, there is shown therein a block diagram of an example of an embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 may be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this example of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with the portable electronic device 20 is a GSM/GPRS wireless network in one example of an implementation, other wireless networks may also be associated with the portable electronic device 20 in variant implementations. The different types of wireless networks that may be employed include, for example, data-centric wireless networks, voice-centric wireless networks, and dual-mode networks that support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex and DataTAC network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display 32 with a touch-sensitive overlay 34 connected to an electronic controller 36, an auxiliary input/output (I/O) subsystem 40, an accelerometer 41 a data port 42, a speaker 44, a microphone 46, short-range communications 48 and other device subsystems 50. The display 32 and the touch-sensitive overlay 34 form a touch-sensitive input device in the form of a touch-sensitive display 38 and the processor 22 interacts with the touch-sensitive overlay 34 via the electronic controller 36. An actuating arrangement 39 is connected to and communicates with the processor 22.

The accelerometer 41 may be a three-axis accelerometer and is used for detecting direction of gravitational forces (or gravity-induced reaction forces). Movement of the portable electronic device 20 to alternate orientations may detected and the orientation of the accelerometer 41, and therefore of the portable electronic device 20, may be determined.

Some of the subsystems of the portable electronic device 20 perform communication-related functions, whereas other subsystems may provide resident or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 may send and receive communication signals over the wireless network 1000 after network registration or activation procedures have been completed. Network access is associated with a subscriber or user of the portable electronic device 20.

To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional smart card that may be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber may access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 may include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information may also be programmed into the flash memory 30.

The portable electronic device 20 is a battery-powered device and includes a battery interface 56 for receiving one or more rechargeable batteries 58. In at least some embodiments, the battery 58 may be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 which are described in more detail below. The operating system 60 and the software components 62 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62, such as specific software applications 64, 66, 68, 70 and 72, or parts thereof, may be temporarily loaded into a volatile store such as the RAM 28. Other software components may also be included, as is well known to those skilled in the art.

The subset of software components 62 that control basic device operations, including data and voice communication applications, will normally be installed on the portable electronic device 20 during manufacture of the portable electronic device 20. Other software applications include a message application 64 that may be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software components 62 may further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. The PIM 68 has the ability to send and receive data items via the wireless network 1000. PIM data items may be seamlessly integrated, synchronized, and updated via the wireless network 1000 with the portable electronic device subscribers corresponding data items stored and/or associated with a host computer system. This functionality creates a mirrored host computer on the portable electronic device 20 with respect to such items. This may be particularly advantageous when the host computer system is the portable electronic device subscribers office computer system.

The software components 62 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that may be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 may be used to pass IT policy commands from the host system to the portable electronic device 20. This may be done in a wireless or wired manner. These instructions may then be passed to the IT policy module 72 to modify the configuration of the device 20. Alternatively, in some cases, the IT policy update may also be done over a wired connection.

Other types of software applications may also be installed on the portable electronic device 20. These software applications may be third party applications, which are added after the manufacture of the portable electronic device 20. Examples of third party applications include games, calculators, utilities, etc.

The additional applications may be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 may be any suitable port that enables data communication between the portable electronic device 20 and another computing device. The data port 42 may be a serial or a parallel port. In some instances, the data port 42 may be a USB port that includes data lines for data transfer and a supply line that may provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or, alternatively, to the auxiliary I/O subsystem 40. A subscriber may also compose data items, such as e-mail messages, for example, using the touch-sensitive overlay 34 on the display 32 that are part of the touch-sensitive display 38, and possibly the auxiliary I/O subsystem 40. The auxiliary subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals may be output to the speaker 44, and signals for transmission are generated by the microphone 46. Alternative voice or audio I/O subsystems, such as a voice message recording subsystem, may also be implemented on the portable electronic device 20.

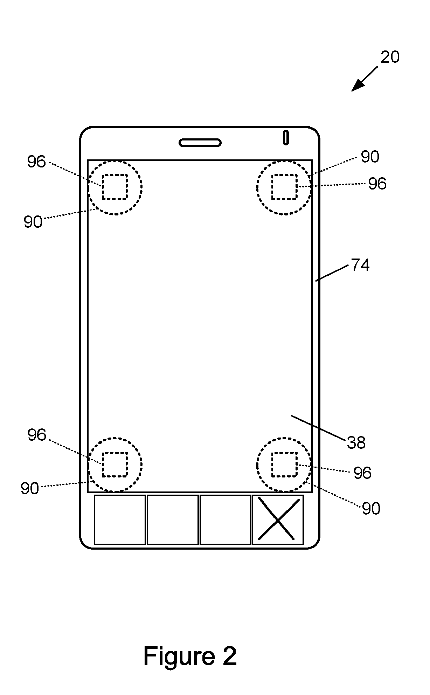

Reference is made to Figure 2 which shows a front view of an example of a portable electronic device 20 in portrait orientation. The portable electronic device 20 includes a housing 74 that houses the internal components that are shown in Figure 1 and frames the touch-sensitive display 38 such that the touch-sensitive display 38 is exposed for user-interaction therewith when the portable electronic device 20 is in use. It will be appreciated that the touch-sensitive display 38 may include any suitable number of user-selectable features rendered thereon, for example, in the form of virtual buttons for user-selection of, for example, applications, options, or keys of a keyboard for user entry of data during operation of the portable electronic device 20.

The touch-sensitive display 38 may be, for example, a capacitive touch-sensitive display that includes the display 32 and the touch-sensitive overlay 34. A capacitive touch-sensitive overlay 34 includes a number of layers in a stack and is fixed to the display 32 via a suitable optically clear adhesive. The layers may include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers may be any suitable material such as patterned indium tin oxide (ITO).

In the present example, the X and Y location of a touch are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user resulting in a change in the electric field of each of the touch sensor layers. The signals represent the respective X and Y touch location values. It will be appreciated that other attributes of the users touch on the touch-sensitive display 38 may be determined. For example, the size and the shape of the touch on the touch-sensitive display 38 may be determined in addition to the location (X and Y values) based on the signals received at the controller 36 from the touch sensor layers.

A users touch on the touch-sensitive display 38 is determined by determining the X and Y touch location and user-selected input is determined based on the X and Y touch location and the application executed by the processor 22. Thus a feature such as a key of a virtual keyboard or other virtual button displayed on the touch-sensitive display 38 may be selected by matching the feature to the X and Y location of a touch on the touch-sensitive display 38. The feature that is selected by the user is determined based on the X and Y touch location and the application.

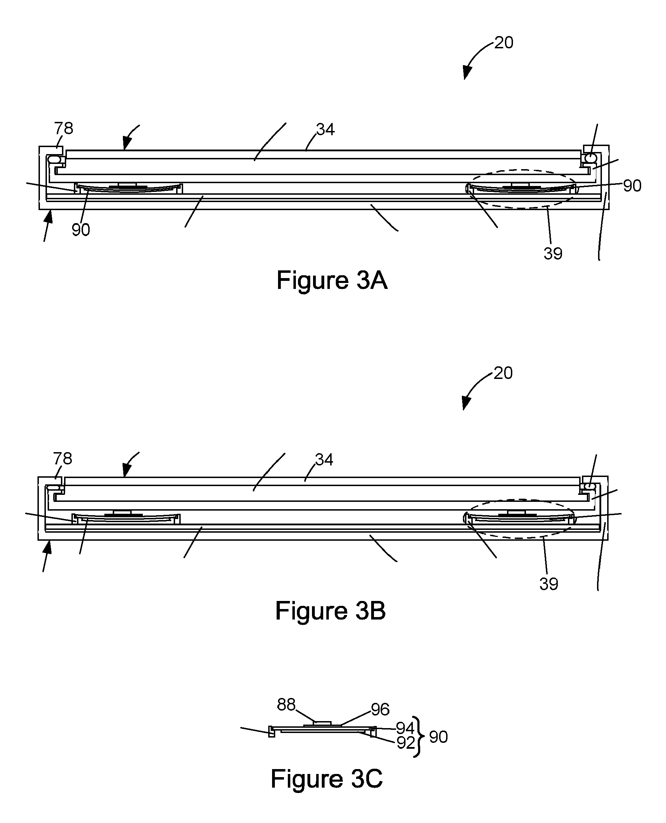

The housing 74 may be any suitable housing for the internal components shown in Figure 1 and for sealing with and facilitating movement of the touch-sensitive display 38. As best shown in Figures 3A and 3B, the housing 74 in the present example includes a back 76, a frame 78, which frames the touch-sensitive display 38 and sidewalls 80 that extend between and generally perpendicular to the back 76 and the frame 78. A base 82 is spaced from and is generally parallel to the back 76. The base 82 may be any suitable base and may include, for example, a printed circuit board or flex circuit board supported by a stiff support between the base 82 and the back 76. The back 76 includes a plate (not shown) that is releasably attached for insertion and removal of, for example, the battery 58 and the SIM/RUIM card 52 described above. It will be appreciated that the back 76, the sidewalls 80 and the frame 78 may be injection molded, for example. In the example of the portable electronic device 20 shown in Figure 2, the frame 78 is generally rectangular with rounded corners although other shapes are possible.

The display 32 and the touch-sensitive overlay 34 may be supported on a support tray 84 of suitable material such as magnesium for providing mechanical support to the display 32 and touch-sensitive overlay 34. A compliant gasket 86 may be located around the perimeter of the frame 78, between an upper portion of the support tray 84 and the frame 78 to provide a seal for protecting the components housed in the housing 74 of the portable electronic device 20 against liquid ingress or foreign material such as sand, dust and lint. A suitable material for the compliant gasket 86 includes, for example, a silicone rubber for shock absorption, vibration damping and suitable fatigue life. The touch-sensitive display 38 is also moveable within the housing 74 as the touch-sensitive display 38 may be moved away from the base 82, thereby compressing the compliant gasket 86, for example and may be moved toward the base 82, thereby compressing plungers 88 (referred to below with reference to Figure 3C). Figures 3A and 3B show exaggerated movement of the touch-sensitive display 38 with Figure 3A showing the touch-sensitive display 38 moved toward the base 82 and with Figure 3B showing the touch-sensitive display 38 with the actuating arrangement 39 actuated to push the touch-sensitive display 38 away from the base 82. The compliant gasket 86 also acts to provide a restoring force, or spring, so that the touch-sensitive display 38 returns to the rest position after being moved by the actuating arrangement 39 in response to an input signal.

In the present example, the actuating arrangement 39 includes four piezoelectric actuators 90, with each piezoelectric actuator 90 supported on a respective support ring 91. Each support ring 91 extends from the base 82 toward the touch-sensitive display 38 for supporting the respective piezoelectric actuator 90 while permitting flexing of the piezoelectric actuator 90. As best shown in Figure 3C, each piezoelectric actuator 90 includes a piezoelectric disk 92 such as a PZT ceramic disk adhered to a metal substrate 94 of larger diameter than the piezoelectric disk 92 for bending when the piezoelectric disk 92 contracts diametrically as a result of build up of charge at the piezoelectric disk 92. Each piezoelectric actuator 90 is supported on the respective support ring 91 on one side of the base 82, proximal a respective corner of the housing 74 with the metal ring sized such that the edge of the metal substrate 94 contacts the support ring 91 for supporting the piezoelectric actuator 90 and permitting flexing of the piezoelectric actuator 90. A plunger 88, which in the present example is a cylinder of suitable material such as a hard rubber for mechanical coupling between the piezoelectric actuator 90 and the touch-sensitive display 38. Hard rubber is a suitable material to reduce chattering during rapid movement. The plunger 88 is located between the piezoelectric actuator 90 and the support tray 84 for applying force to the support tray 84. A respective force sensor 96 is located between each plunger 88 and the respective piezoelectric actuator 90 and each respective force sensor 96 is adhered to both the respective plunger 88 and the respective piezoelectric actuator 90. Alternatively, each respective force sensor 96 may be deposited or disposed on the piezoelectric actuator 90 without adhesion. A suitable force sensor 96 includes, for example, a puck-shaped force sensing resistor for measuring applied force (or pressure). It will be appreciated that a force may be determined using a force sensing resistor as an increase in pressure on the force sensing resistor results in a decrease in resistance (or increase in conductance). In the portable electronic device 20, each piezoelectric actuator 90 is located between the base 82 and the support tray 84 and force is applied on each piezoelectric actuator 90 by the touch-sensitive display 38, in the direction of the base 82, causing bending of the piezoelectric actuator 90. Thus, absent an external force applied by the user, for example by pressing on the touch-sensitive display 38, and absent a charge on the piezoelectric actuator 90, the piezoelectric actuator 90 undergoes slight bending. An external applied force in the form of a user pressing on the touch-sensitive display 38 during a touch, and without actuation of the piezoelectric actuator 90, causes increased bending of the piezoelectric actuator 90, as shown in Figure 3A and the piezoelectric actuator 90 applies a spring force against the touch-sensitive display 38. Alternatively, a reverse charge on the piezoelectric actuator 90 may result in further bending of the piezoelectric actuator 90 as shown in Figure 3A. When the piezoelectric disk 92 is charged, the piezoelectric disk 92 shrinks diametrically and causes the metal substrate 94 and piezoelectric disk 92 to apply a further force on the touch-sensitive display 38 as the piezoelectric actuator 90 straightens, as shown in Figure 3B.

The support rings 91 may be part of the base 82 or may be supported on the base 82. Each piezoelectric actuator 90 is located between the base 82 and the support tray 84 such that an external applied force on the touch-sensitive display 38 resulting from a user pressing the touch-sensitive display 38 may be measured by the force sensors 96 and such that the charging of the piezoelectric actuator 90 results in an applied force on the touch-sensitive display 38 to cause movement of the touch-sensitive display 38, away from the base 82.

In the present embodiment each piezoelectric actuator 90 is in contact with the support tray 84. Thus, depression of the touch-sensitive display 38 by user application of a force thereto is determined by a change in resistance at the force sensors 96 and causes further bending of the piezoelectric actuators 90 as shown in Figure 3A. Further, the charge on the piezoelectric actuator 90 may be modulated to control the force applied by the piezoelectric actuator 90 on the support tray 84 and the resulting movement of the touch-sensitive display 38. The charge may be modulated by modulating the applied voltage or current. For example, a current may be applied to increase the charge on the piezoelectric actuator 90 to contract the piezoelectric disk 92 as described above, causing the metal substrate 94 and the piezoelectric disk 92 to straighten as referred to above. This charge therefore results in the force on the touch-sensitive display 38 for moving the touch-sensitive display 38 away from the base 82, as shown in Figure 3B. The charge on the piezoelectric actuator 90 may also be removed via a controlled discharge current causing the piezoelectric disk 92 to expand again, releasing the force caused by the electric charge and thereby decreasing the force on the touch-sensitive display 38, facilitating movement of the touch-sensitive display 38 to return to a rest position. The movement of the touch-sensitive display 38 and the flexing of the piezoelectric actuators 90 is exaggerated in Figures 3A and 3B for the purpose of illustration.

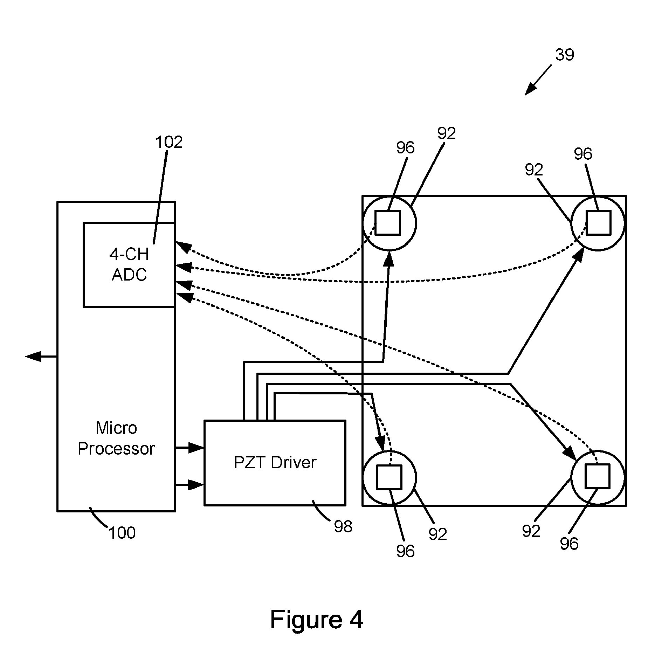

Figure 4 shows the actuating arrangement 39 according to one embodiment. As shown, each of the piezoelectric disks 92 is connected to a piezo driver 98 that communicates with a microprocessor 100 including a four-channel amplifier and analog-to-digital converter 102 that is connected to each of the force sensors 96.

The microprocessor 100 is also in communication with the main processor 22 of the portable electronic device 20. The microprocessor 100 may provide signals to the main processor 22 and may receive signals from the main processor 22. It will be appreciated that the piezo driver 98 may be embodied in drive circuitry between the microprocessor 100 and the piezoelectric disks 92.

The mechanical work performed by the piezoelectric actuator 90 may be controlled to provide generally consistent force and movement of the touch-sensitive display 38 in response to detection of an applied force on the touch-sensitive display 38 in the form of a touch, for example. Fluctuations in mechanical work performed as a result of, for example, temperature, may be reduced by modulating the current to control the charge. Those skilled in the art will appreciate that each piezoelectric disk 92 has similar electrical properties to a capacitor. The mechanical work performed (force * displacement) by the peizo disk actuator 90 may be controlled by controlling the charge, expressed as:

$$Q_{piezo} = C_{piezo} * V_{piezo}$$

where:

Q	is charge;

C	is capacitance; and

V	is voltage.

A coefficient, referred to as the D31 coefficient of a piezoelectric material composition provides the relationship between voltage and force. The D31 coefficient and the relative dielectric constant, (Er) of a given piezoelectric material composition vary inversely with temperature, however. Therefore, if the charge of the piezoelectric disk 92 is controlled within a small range, the variance of the mechanical work of the piezoelectric actuator 90 may be small. The current may be controlled as the current flowing in or out of a capacitor (which has similar electrical properties to the piezoelectric disk 92) is given by:

$$I = C * dV / dT$$

where:

I	is current;

C	is capacitance; and

dV/dT	is differential voltage or instantaneous rate of voltage change

With I and dT held constant, then as C decreases, dV increases. Thus the charge is controlled since $Q_{piezo} = C_{piezo} * V_{piezo}$.·

The microprocessor 100 controls the PZT driver 98 for controlling the current to the piezoelectric disks 92 and thereby controlling the charge, increasing the charge to increase the force on the touch-sensitive display 38 away from the base 82 and decreasing the charge to decrease the force on the touch-sensitive display 38, causing the touch-sensitive display 38 to move toward the base 82. In the present example, each of the piezoelectric actuators 90 are connected to the microprocessor 100 through the piezo driver 98 and are all controlled equally and concurrently. It will be appreciated that the piezo disk actuators 90 can be controlled separately, however.

The portable electronic device 20 is controlled generally by modulating a force on the touch-sensitive display 38 to cause movement of the touch-sensitive display 38 relative to the base 82 of the portable electronic device 20 in response to detection of a touch. The force is applied by the piezo disk actuators 90 on the touch-sensitive display 38.

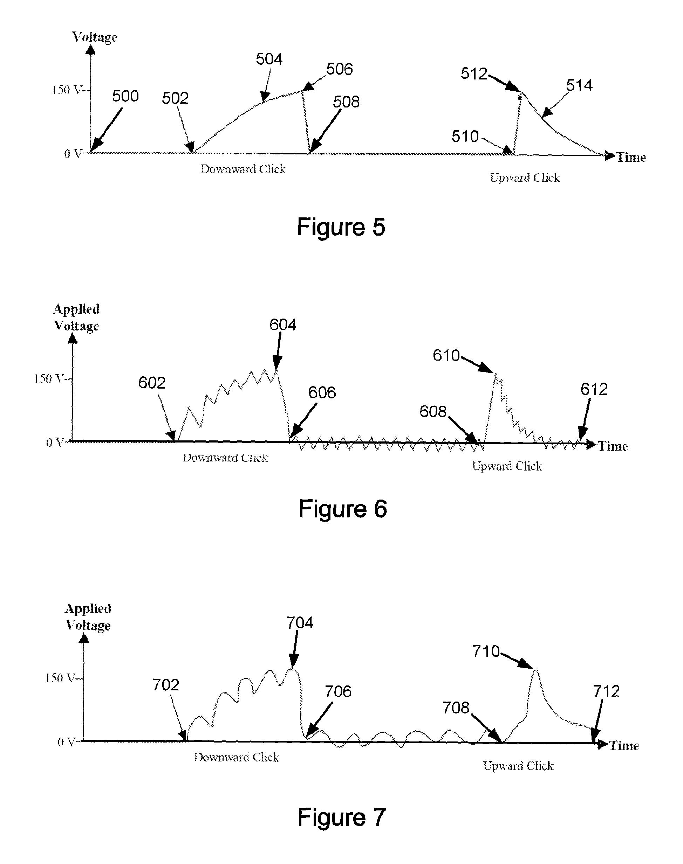

Referring now to Figure 5, there is shown a simplified example of a graph of voltage across the piezoelectric disk 92 versus time, illustrating one example of a response to detection of a touch during operation of the portable electronic device 20. The response is provided by modulating the force applied by the piezo disk actuators 90 to simulate actuation of a dome switch. It will be appreciated that the voltage is the voltage across one of the piezoelectric disks 92, which is related to the charge at the piezoelectric disk 92. This example is provided for the purpose of illustration and is not intended to limit the scope of the present disclosure. A user touches the screen at the point indicated by the numeral 500 and the external force applied, by the user, on the touch-sensitive display 38 increases causing the touch-sensitive display 38 to move towards the base 82 and resulting in deflection of the piezo disk actuators 90. Referring to the initial peek labeled Downward Click in Figure 5, the threshold for ce is reached at the point indicated by the numeral 502 and the piezo disk actuators 90 are actuated by an applied current to each of the piezoelectric disks 92. The applied current is controlled to ramp up the charge over a period of time such that the force on the touch-sensitive display 38 and any resulting deflection of the touch-sensitive display 38 is not detected by the user. For example, the external force applied by the users touch on the touch screen display may be about 1.5N. The piezoelectri c actuators 90 provide an opposing spring force and when actuated may together ramp up to an additional opposing force of about 0.7N over a period of about 20 milliseconds. The portion of the graph indicated by the numeral 504 illustrates the increase in voltage across one of the piezoelectric disks 92 as a result of the applied current. After ramp up of the charge over the period of time, the charge on the piezoelectric disks 92 is removed by a suitable discharge current, thereby reducing the voltage across the piezoelectric disks 92. The charge is removed over a much shorter period of time relative to the period of time for ramp up. For example, the additional opposing force of about 0.7N can be reduced to about 0 over a period of about 3 milliseconds between the points indicated by the numeral 506 and 508, thereby causing movement of the touch-sensitive display 38 toward the base 82 and simulating collapse of a dome switch. The user then begins to lift the finger from the touch-sensitive display 38, to end the touch and the external applied force on the touch-sensitive display 38 is therefore reduced between the points 508 and 510 in Figure 5. Referring to the peak labeled Upward Click in Figure 5, the measured force at the force sensors 96 falls below a predetermined level and the applied current to the piezoelectric disks 92 is controlled to increase the charge and thereby increase the voltage across the piezoelectric disks 92, as shown by the portion of the graph of Figure 5 between the points indicated by the numerals 510 and 512. The force applied by the piezoelectric actuator 90 on the touch-sensitive display 38 is therefore increased, resulting in movement of the touch-sensitive display 38 away from the base 82 over a very short period of time as compared to the period of time for ramp up. In the example shown in Figure 5, the force falls below the predetermined level at the point indicated by the numeral 510 and the piezoelectric disks 92 are charged to increase the additional force of the piezoelectric actuators on the touch-sensitive display 38 to about 0.7N to cause movement of the touch-sensitive display 38. The current is applied to increase the voltage across the piezoelectric disks 92 over a period of about 3 milliseconds to simulate the release of a dome switch. After the increase in charge, the charge on each piezo disk 92 is removed by a discharge current, thereby reducing the voltage across the piezoelectric disks 92 to reduce the additional applied force to about 0 over a much longer period of time relative to the period of time for simulating release of the dome switch. For example, the discharge current may be applied to reduce the voltage across the piezoelectric disks 92 over a ramp down or decay period of about 20 milliseconds, as shown in the portion of the graph of Figure 5 indicated by the numeral 514, thereby removing the applied force by the piezo actuators 90 over a period of time such that the reduction is not detected by user touch. Thus, the piezo actuators 90 are controlled to provide the user with the tactile feel of collapse and release of a dome switch.

Figure 6 shows a simplified example of a graph of voltage across the piezoelectric disk 92 versus time illustrating another response to detection of a touch during operation of the portable electronic device 20. The response is provided by modulating the force applied by the piezo disk actuators 90 to simulate actuation of a dome switch. In addition, the force is modulated to provide a high frequency tactile feedback. The response illustrated in Figure 6 is similar to the response illustrated in Figure 5 in that the actuation and release of a dome switch is simulated in a similar manner. In the present response, however, the current is applied and discharged to modulate the force applied by the piezoelectric actuators at high frequency and low magnitude, relative to the force for simulating actuation and release of the dome switch, during simulation of actuation and release of the dome switch. The current is applied and discharged abruptly to modulate the force applied by the piezoelectric actuators to abruptly increase and decrease the force at high frequency and low magnitude. As shown, the current is applied and discharged at high frequency during the ramp up time period shown between the points 602 and 604, between the simulation of collapse of the switch and the beginning of the simulation of release shown between points 606 and 608 and during the ramp down or decay period between the points 610, 612. Thus, a high frequency response is provided during simulation of actuation and release of the dome switch. A high frequency of about 250 Hz to 500 Hz, resulting in about 5 to 10 oscillations between 602 and 606 may be utilized. A magnitude of about 10% to about 30% of the magnitude of the simulated collapse between 604 and 606. The piezo actuators 90 are therefore controlled to provide the user with a different tactile feel as compared to that shown and described with reference to Figure 5. As a result, the user perceives a different response that may perceive a somewhat sharper or slightly unpleasant response.

Figure 7 shows a simplified example of a graph of voltage across the piezoelectric disk 92 versus time illustrating yet another response to detection of a touch during operation of the portable electronic device 20. The response is provided by modulating the force applied by the piezo disk actuators 90 to simulate actuation of a dome switch. In addition, the force is modulated to provide a high frequency tactile feedback. The response illustrated in Figure 7 is similar to the response illustrated in Figure 5 in that the actuation and release of a dome switch is simulated in a similar manner. In the present response, however, the current is applied and discharged to modulate the force applied by the piezoelectric actuators at high frequency and low magnitude, relative to the force for simulating actuation and release of the dome switch, during simulation of actuation and release of the dome switch. In the present response, the current is applied and discharged smoothly by comparison to that of Figure 6 to modulate the force applied by the piezoelectric actuators to relatively smoothly increase and decrease the force at high frequency and low magnitude. As shown, the current is applied and discharged at high frequency during the ramp up time period shown between the points 702 and 704, between the simulation of collapse of the switch and the beginning of the simulation of release shown between points 706 and 708 and during the ramp down or decay period between the points 710, 712. Thus, a high frequency response is provided during simulation of actuation and release of the dome switch. A high frequency of about 250 Hz to 500 Hz, resulting in about 5 to 10 oscillations between 702 and 706 may be utilized.

A magnitude of about 10% to about 30% of the magnitude of the simulated collapse between 604 and 606. The piezo actuators 90 are therefore controlled to provide the user with a different tactile feel as compared to that shown and described with reference to Figure 5 and Figure 6. As a result, the collapse and release simulation may be perceived as being not as crisp as in the example of Figure 5.

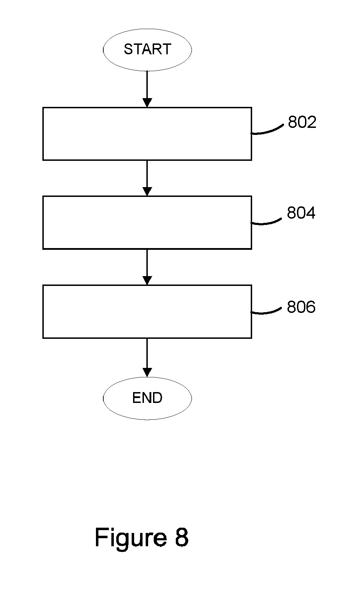

Figure 8 is a flow chart illustrating a method of controlling the portable electronic device 20 to provide tactile feedback. It will be appreciated that the method of Figure 8 may be carried out by, for example, by the processor 22 or the microprocessor 100 executing software from a computer-readable medium. Coding of software for carrying out such steps is well within the scope of a person of ordinary skill in the art having regard to the present description.

As shown, a touch on the touch-sensitive display 38 is determined 802 and an input is determined 804 based on the touch. A tactile feedback response is selected and provided 806 based on the input. The tactile feedback response is provided by modulating the force on the touch-sensitive display 38. For example, a response may be selected from one of the responses described above with reference to Figures 5 to 7 or may be any other suitable response.

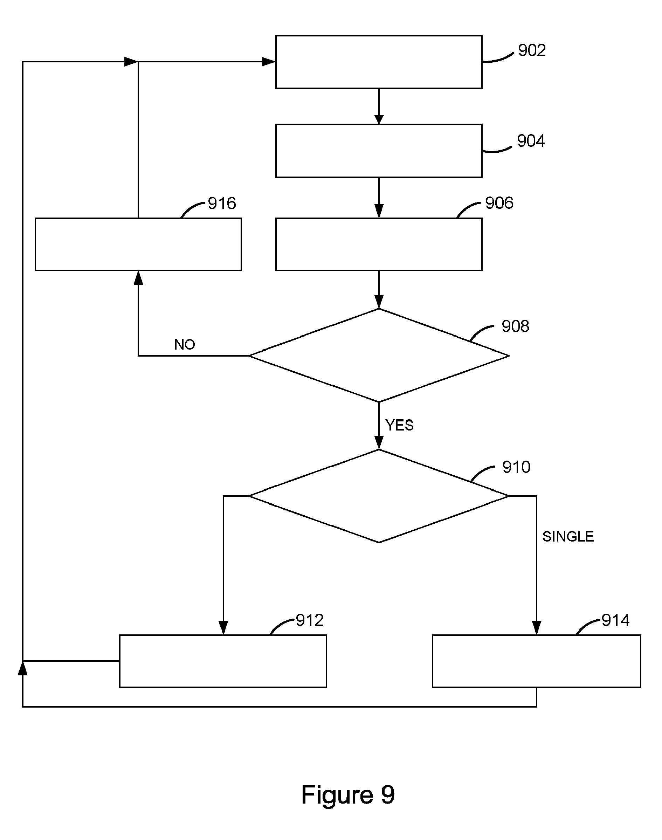

Figure 9 is a flow chart illustrating a specific example of the method of controlling the portable electronic device 20 to provide tactile feedback. The method is performed by the processor 22 and/or the microprocessor 100 performing stored instructions from a computer-readable medium, such as described above. A user interface is provided, which in the present example, is a keyboard for selecting characters on the touch-sensitive display 38 of the portable electronic device 20. The keyboard may be a reduced keyboard in which at least some of the keys of the keyboard are associated with more than one character. For example, a reduced QWERTY keyboard may be provided in which the letters Q and W share a single key, the letters E and R share a single key, and so on.

When a touch is detected 902 within the target area of one of the keys of the keyboard, the location of touch on the touch-sensitive display 38 is determined and the associated characters, which may be letters, are determined 904 based on the touch location. The characters are added 906 to any previously entered character string on the portable electronic device 20. Thus, the characters are added to the previously selected characters such that each possible combination of character strings is determined. It is then determined 908 if any objects that are stored in, for example, the flash memory 30, have at least an initial portion that matches at least one of the character strings. Therefore, the character strings, determined based on user selection of keys of the keyboard, are compared to a list of terms stored at the portable electronic device 20.

If it is determined 910 that multiple objects have at least an initial portion that matches one of the character strings, a first output is provided 912. The first output may be, for example, the output shown and described above with reference to Figure 5. Thus, tactile feedback is provided by modulating the force on the touch-sensitive display 38 to simulate actuation of the dome switch. This tactile feedback provides confirmation of entry.

If it is determined 910 that only a single object has at least an initial portion that matches one of the character strings, a second output is provided 914. The second output may be, for example, the output shown and described above with reference to Figure 7. Thus, tactile feedback is provided by modulating the force relatively smoothly at high frequency and low magnitude during simulation of actuation of the dome switch. This smooth modulation of the force at high frequency and low magnitude during simulation of actuation of the dome switch provides confirmation of entry and, advantageously, provides additional feedback indicating that the portable electronic device has identified an object (i.e., a word in a dictionary list of words stored at the portable electronic device 20) that the user may select rather than continuing to enter remaining characters of the string.

If it is determined at step 908 that there are no objects that have at least an initial portion that match the character strings, a third output is provided 916. The third output may be, for example, the output shown and described above with reference to Figure 6. Thus, tactile feedback is provided by abruptly modulating the force at high frequency and low magnitude during simulation of actuation of the dome switch. This abrupt modulation of the force at high frequency and low magnitude during simulation of actuation of the dome switch provides confirmation of entry and, advantageously, provides additional feedback indicating that there are no objects stored in the flash memory 30 that match the possible character strings entered, thereby providing an early indication of a possible misspelled or incorrectly entered stri ng.

The flow chart of Figure 9 illustrates only one example of the control of the portable electronic device to provide input-dependent tactile feedback by modulating a force applied by the actuating arrangement 39 on the touch-sensitive display 38. The high frequency and relatively low magnitude of modulation of force during simulating actuation of a dome switch provides further information to a user and may be used in other suitable methods.

The actuating arrangement 39 provides a relatively thin device to simulate actuation of a dome switch upon touching the touch-sensitive display 38 to provide a desirable tactile feedback for confirming receipt of input to the user, thereby providing a positive response and reducing the chance of input errors such as double entry, decreasing use time and increasing user-satisfaction. Further, the actuating arrangement 39 may selectively provide high frequency and relatively low magnitude of modulation of force during simulation of the dome switch to provide further feedback to the user. In the example described above with reference to Figure 9, the additional feedback may notify the user of a misspelled or mistyped word for correction. The additional feedback may also notify the user that the portable electronic device 20 has narrowed down the possible words to a single word for user selection, thereby saving the user from having to type the remaining characters of the word. Such feedback therefore facilitates user-entry, saving device use time and reducing power consumption.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

**Claims**

1. A method of controlling an electronic device having a touch-sensitive input device, the method comprising:

    detecting a touch on the touch-sensitive input device;
    determining an input based on the touch; and
    providing a response to the touch by modulating a force applied by an actuating arrangement on the touch-sensitive input device based on the input.

2. The method according to claim 1, wherein providing the response comprises selecting the response, from at least two responses, based on the input.

3. The method according to claim 1, wherein providing the response comprises modulating the force to simulate actuation of a dome switch and, during simulation of actuation of the dome switch, varying the force at high frequency and low magnitude relative to modulating the force to simulate actuation of the dome switch.

4. The method according to claim 3, wherein varying the force comprises varying at high frequency and low magnitude based on the input.

5. The method according to claim 3, wherein determining an input comprises determining a selected character.

6. The method according to claim 5, comprising adding the selected character to a character string, determining if objects stored in reference data have an initial portion that match the character string, and providing the response based on whether or not an object or objects stored in reference data have an initial portion that matches the character string.

7. The method according to claim 6, wherein providing the response comprises providing a first response when an object stored in reference data has an initial portion that matches the character string and providing a second response, different from the first response, when no objects stored in reference data have an initial portion that matches the character string.

8. The method according to claim 6, wherein providing the response comprises providing a first response when one object stored in reference data has an initial portion that matches the character string and providing a second response, different from the first response, when more than one object stored in reference data has an initial portion that matches the character string.

9. The method according to claim 8, comprising providing a third response, different from the first response and the second response, when no objects stored in reference data have an initial portion that matches the character string.

10. The method according to claim 3, wherein modulating the force to simulate actuation of a dome switch comprises reducing the force over a collapse time period to cause the touch-sensitive input device to move toward the base to simulate collapse of a dome switch.

11. The method according to claim 10, wherein modulating the force to simulate actuation of the dome switch comprises increasing the force on the touch-sensitive input device, in a direction away from the base, over a ramp-up time period prior to reducing the force over the collapse time period, wherein the ramp-up time period is longer than the collapse time period.

12. The method according to claim 11, wherein modulating the force to simulate actuation of the dome switch comprises increasing the force over a release time period to cause the touch-sensitive input surface to move away from the base to simulate release of the dome switch.

13. The method according to claim 12, wherein modulating the force to simulate actuation of the dome switch comprises decreasing the force over a ramp-down time period after increasing the force over the release time period, wherein the ramp-down time period is longer than the release time period.

14. An electronic device comprising:

a base;
a touch-sensitive input device moveable relative to the base; and
an actuating arrangement comprising at least one actuator between the base and the touch-sensitive input device to modulate a force on the touch-sensitive input device, based on an input determined in response to detecting a touch.

15. A computer-readable medium having computer-readable code embodied therein for execution by a processor in an electronic device having a base, a touch-sensitive input device moveable relative to the base, and an actuating arrangement comprising at least one actuator between the base and the touch-sensitive input device, to cause the electronic device to modulate a force on the touch-sensitive input device based on an input determined in response to detecting a touch.

**Amended claims in accordance with Rule 137(2) EPC.**

1. A method of controlling an electronic device (20) having a touch-sensitive input device (38), the method comprising,

detecting a touch on the touch-sensitive input device (38);
determining an input based on the touch; and
providing a response to the touch by modulating a force applied by an actuating arrangement (39) on the touch-sensitive input device (38) based on the input to simulate actuation of a dome switch and, during simulation of actuation of the dome switch, varying the force at high frequency and low magnitude relative to modulating the force to simulate actuation of the dome switch.

2. The method according to claim 1, wherein providing the response comprises selecting the response, from at least two responses, based on the input.

3. The method according to claim 1, wherein varying the force comprises varying at high frequency and low magnitude based on the input.

4. The method according to claim 1, wherein determining an input comprises determining a selected character.

5. The method according to claim 4, comprising adding the selected character to a character string, determining if objects stored in reference data have an initial portion that match the character string, and providing the response based on whether or not an object or objects stored in reference data have an initial portion that matches the character string.

**6.** The method according to claim 5, wherein providing the response comprises providing a first response when an object stored in reference data has an initial portion that matches the character string and providing a second response, different from the first response, when no objects stored in reference data have an initial portion that matches the character string.

**7.** The method according to claim 5, wherein providing the response comprises providing a first response when one object stored in reference data has an initial portion that matches the character string and providing a second response, different from the first response, when more than one object stored in reference data has an initial portion that matches the character string.

**8.** The method according to claim 7, comprising providing a third response, different from the first response and the second response, when no objects stored in reference data have an initial portion that matches the character string.

**9.** The method according to claim 1, wherein modulating the force to simulate actuation of a dome switch comprises reducing the force over a collapse time period to cause the touch-sensitive input device (38) to move toward a base (82) to simulate collapse of a dome switch.

**10.** The method according to claim 10, wherein modulating the force to simulate actuation of the dome switch comprises increasing the force on the touch-sensitive input device (38), in a direction away from the base (82), over a ramp-up time period prior to reducing the force over the collapse time period, wherein the ramp-up time period is longer than the collapse time period.

**11.** The method according to claim 10, wherein modulating the force to simulate actuation of the dome switch comprises increasing the force over a release time period to cause the touch-sensitive input surface (38) to move away from the base (82) to simulate release of the dome switch.

**12.** The method according to claim 11, wherein modulating the force to simulate actuation of the dome switch comprises decreasing the force over a ramp-down time period after increasing the force over the release time period, wherein the ramp-down time period is longer than the release time period.

**13.** An electronic device (20) comprising:

a base (82);
a touch-sensitive input device (38) moveable relative to the base (82);
and
an actuating arrangement (39) comprising at least one actuator between the base (82) and the touch-sensitive input device (38) to modulate a force on the touch-sensitive input device (28), based on an input determined in response to detecting a touch, to simulate actuation of a dome switch and, during simulation of actuation of the dome switch,
varying the force at high frequency and low magnitude relative to modulating the force to simulate actuation of the dome switch.

**14.** A computer-readable medium having computer-readable code embodied therein for execution by a processor (22) in an electronic device (20) having a base (82), a touch-sensitive input device (38) moveable relative to the base (82), and an actuating arrangement (39) comprising at least one actuator between the base (82) and the touch-sensitive input device (38), to cause the electronic device (20) to modulate a force on the touch-sensitive input device (38) based on an input determined in response to detecting a touch, to simulate actuation of a dome switch and, during simulation of actuation of the dome switch, varying the force at high frequency and low magnitude relative to modulating the force to simulate actuation of the dome switch.

Figure 1

Figure 2

Figure 3A

Figure 3B

Figure 3C

Figure 4

Figure 5

Figure 6

Figure 7

Figure 8

Figure 9

Europäisches
Patentamt
European
Patent Office
Office européen
des brevets

## EUROPEAN SEARCH REPORT

Application Number

EP 09 16 7905

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/167704 A1 (TERLIZZI JEFFREY J [US] ET AL) 2 July 2009 (2009-07-02) * paragraph [0077] * * abstract; figures 8a, 8b * | 1,2 | INV. G06F3/023 G06F3/01 G06F3/041 |
| X | EP 2 028 583 A2 (SAMSUNG ELECTRONICS CO LTD [KR]) 25 February 2009 (2009-02-25) * abstract; figure 4 * * paragraphs [0024], [0 30], [0 31] * | 1,2 | |
| A | US 2009/072662 A1 (SADLER DANIEL J [US] ET AL) 19 March 2009 (2009-03-19) * abstract; figure 6 * * paragraphs [0018], [0 38] * | 3-12 | |

TECHNICAL FIELDS
SEARCHED    (IPC)

G06F
H04M

The present search report has been drawn up for all claims

| Place of search | Date of completion of the search | Examiner |
|---|---|---|
| Berlin | 19 April 2010 | Griesbach, Axel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 16 7905

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2010

| Patent document cited in search report | | Publication date | Patent family member(s) | | Publication date |
|---|---|---|---|---|---|
| US 2009167704 | A1 | 02-07-2009 | WO | 2009085060 A1 | 09-07-2009 |
| EP 2028583 | A2 | 25-02-2009 | CN | 101373414 A | 25-02-2009 |
| | | | KR | 20090020040 A | 26-02-2009 |
| | | | US | 2009051667 A1 | 26-02-2009 |
| US 2009072662 | A1 | 19-03-2009 | WO | 2009039068 A2 | 26-03-2009 |

EPO FORM P0459

For more details about this annex : see Official Journal of the European Patent Office, No. 12/82